# EUROPEAN PATENT APPLICATION

(11) **EP 2 674 831 A2**
(43) Date of publication of application: **18.12.2013**
(21) Application number: 12194075.3
(22) Date of filing: 23.11.2012
(51) Int. Cl.: G06F 1/16

(54) **Multi-part apparatus and data transmission method thereof**

(30) Priority: 13.06.2012 US 201261659325 P; 28.08.2012 TW 101131221
(71) Applicant: Acer Incorporated, New Taipei City 221 (TW)
(72) Inventor: Lee, Yuan-Hsin, 221 New Taipei City (TW); Chen, Mei-Jung, 221 New Taipei City (TW); Yuan, Chia-Shang, 221 New Taipei City (TW); Chiou, Tzeng-Chih, 221 New Taipei City (TW); Chiang, Wen-Hsien, 221 New Taipei City (TW); Liew, Sze-Thai, 221 New Taipei City (TW)
(74) Representative: Chamberlain, Alan James

(57) **Abstract**

A multi-part apparatus and a data transmission method thereof are provided. The method is adapted to a multi-part apparatus having a master apparatus and a separable slave apparatus. The master apparatus and the slave apparatus are attached to each other through magnetism, and each of them has a wireless transmission module and a plurality of pins disposed on a side. In this method, a variation of the magnetism is detected, so as to determine a relative position between the master apparatus and the slave apparatus. When the master apparatus and the slave apparatus are attached to each other with a shift, a wireless connection set up by the wireless transmission modules is used for data transmission; and when the master apparatus and the slave apparatus are connected to each other with the sides thereof, both the wireless connection and the pins are used for data transmission.

## Description

### CROSS-REFERENCE TO RELATED APPLICATION

This application claims the priority benefits of U.S. provisional application serial no. 61/659,325, filed on June 13, 2012 and Taiwan application serial no. 101131221, filed on August 28, 2012. The entirety of each of the above-mentioned patent applications is hereby incorporated by reference herein and made a part of this specification.

### Field of the Invention

The present invention generally relates to an electronic apparatus and a data transmission method thereof, in particular, to a magnetically attached multi-part apparatus and a data transmission method thereof.

### Description of Related Art

Due to high demand on mobile apparatuses with a small, thin, short, and lightweight form factor in the recent consumer market, the volume of the mobile apparatuses are considerably restricted. In terms of a cellular phone and a tablet computer, if a keypad and a screen are required to be disposed on the apparatus, reduction of the dimension of the screen is inevitable. In order to configure a larger screen within a limited area, a touch screen has been developed recently. Such touch screen can simultaneously serves as a display and input interface of the mobile apparatus, so as to save the cost for configuring the conventional keypad and reduce the occupied area.

To satisfy operation requirements of various applications, the mobile apparatus may display a corresponding operating interface on the touch screen based on the requirements of each application during execution for a user to operate the features of the application through touching. For example, when the user activates a document editing application, the mobile apparatus displays a virtual keypad on the touch screen for the user to input text; when the user activates a multimedia player, the mobile apparatus displays control buttons such as a PLAY button, a PAUSE button, a STOP button, a FAST-FORWARD button, and a REVERSE button on the touch screen for the user to operate the multimedia playing feature.

Nonetheless, user interfaces such as a keypad or control buttons displayed on the touch screen may still occupy a considerably large display area, and thus other contents may be compressed into a smaller area and be quite difficult to read. Additionally, when the user listens to a phone call, he/she may not be able to further control the mobile apparatus since the touch screen is closed for preventing from the user inadvertently contacting with the touch screen.

In this connection, mobile apparatuses with a larger display screen area and flexibility in usage should be developed with necessity for adapting to different usages.

### SUMMARY OF THE INVENTION

Based on the above, the present invention is directed to a multi-part apparatus and a data transmission method thereof, in which two apparatuses are attached to each other through magnetism, and their positions are determined based on a variation of the magnetism thereby changing a way of data transmission and display.

The present invention is directed to a data transmission method of a multi-part apparatus suitably adapted to a multi-part apparatus having a master apparatus and a separable slave apparatus. The master apparatus and the slave apparatus are attached to each other through magnetism and each of them has a wireless transmission module and a plurality of pins disposed on a side. In this method, a variation of the magnetism is detected, so as to determine a relative position between the master apparatus and the slave apparatus. When the master apparatus and the slave apparatus are attached to each other with a shift, a wireless connection set up by the wireless transmission modules is used for data transmission; and when the master apparatus and the slave apparatus are connected to each other with the sides thereof, both the wireless connection and the pins are used for data transmission.

The present invention is directed to a multi-part apparatus including a master apparatus and a slave apparatus. The master apparatus includes a first touch screen disposed on a front of the master apparatus, a first wireless transmission module, a plurality of first pins disposed on a side of the master apparatus, a plurality of first magnetic objects disposed on a back of the master apparatus, and a first controller coupled to the first touch screen, the first wireless transmission module, and the first pins. The slave apparatus includes a second touch screen disposed on a front of the slave apparatus, a second wireless transmission module configured to set up a wireless connection with the first wireless transmission module, a plurality of second pins disposed on a side of the slave apparatus and configured to correspondingly connect to the first pins of the master apparatus, a plurality of second magnetic objects disposed on the front of the slave apparatus, and a second controller coupled to the second touch screen, the second wireless transmission module, and the second pins. The second magnetic objects are disposed on the front of the slave apparatus corresponding to positions of the first magnetic objects on the master apparatus and configured to attract the first magnetic objects through magnetism, so as to enable the master apparatus and the slave apparatus to be attached to each other with an overlay or a shift. Moreover, the first controller and the second controller transmit data via the wireless connection when the master apparatus and the slave apparatus are attached to each other with the shift; and the first controller and the second controller transmit data via the wireless connection and a wired connection between the first pins and the second pins when the master apparatus and the slave apparatus are connected to each other with the sides thereof.

Based on the above, a multi-part apparatus and a data transmission method thereof in the present invention attach two apparatuses through magnetism. When the two apparatuses are attached to each other with a shift, a wireless connection set up by wireless transmission modules is used for data transmission; and when the two apparatuses are connected to each other with the sides thereof, both the wireless connection and a plurality of the pins on the sides are used for data transmission. Through this, a larger display screen area and flexibility in usage may be provided.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1A to FIG. 1E are schematic diagrams of a multi-part apparatus in accordance with an embodiment of the prevent invention.

FIG. 2 is a block diagram of a multi-part apparatus in accordance with an embodiment of the prevent invention.

FIG. 3 is a flow diagram of a data transmission method of a multi-part apparatus in accordance with an embodiment in the present embodiment.

FIG. 4A and FIG. 4B are operation images of a multi-part apparatus with different shifts in accordance with an embodiment in the present invention.

FIG. 5 is flow diagram of a data transmission method of a multi-part apparatus in accordance with another embodiment in the invention.

FIG. 6A to FIG. 6C are illustrations of usage of a multi-part apparatus in accordance with an embodiment in the present invention.

### DESCRIPTION OF THE EMBODIMENTS

Reference will now be made in detail to the present embodiments of the invention, examples of which are illustrated in the accompanying drawings. Wherever possible, the same reference numbers are used in the drawings and the description to refer to the same or like parts.

In order to increase a display area of a screen of an apparatus without changing its volume, in present invention, two thin apparatuses with an identical size are stacked with each other through magnetism to form a multi-part apparatus. Then, a disposition status between the two apparatuses including an overlaid, shifted, side-connected, or separated state is determined by detecting a variation of the magnetism and accordingly the contents of the display images of the two apparatuses and data transmission methods between the two apparatuses are changed. Through this, the present invention provides a user with a larger display screen area and a more convenient operating interface.

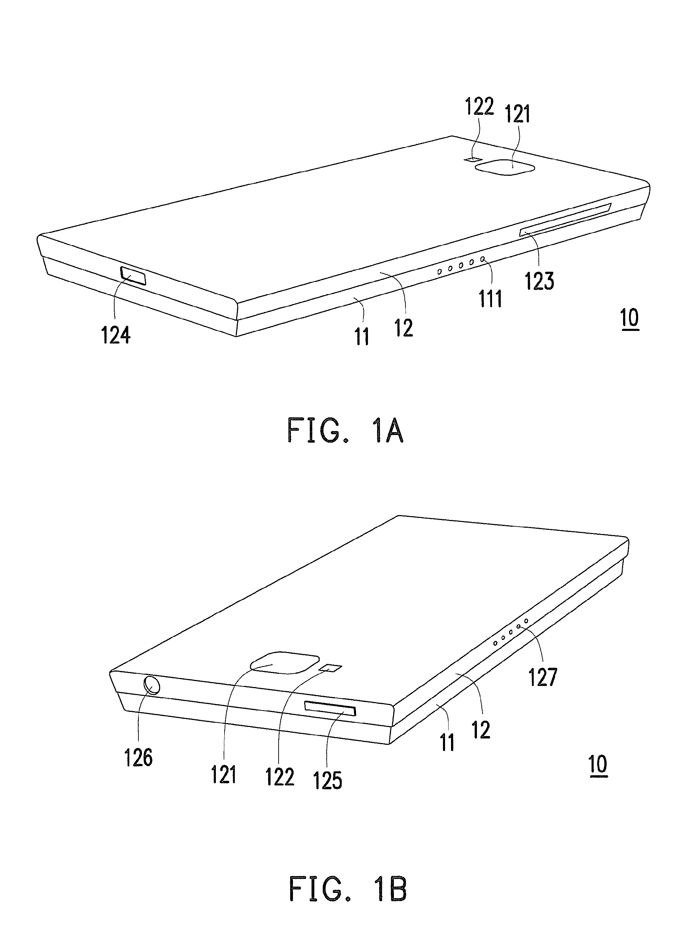

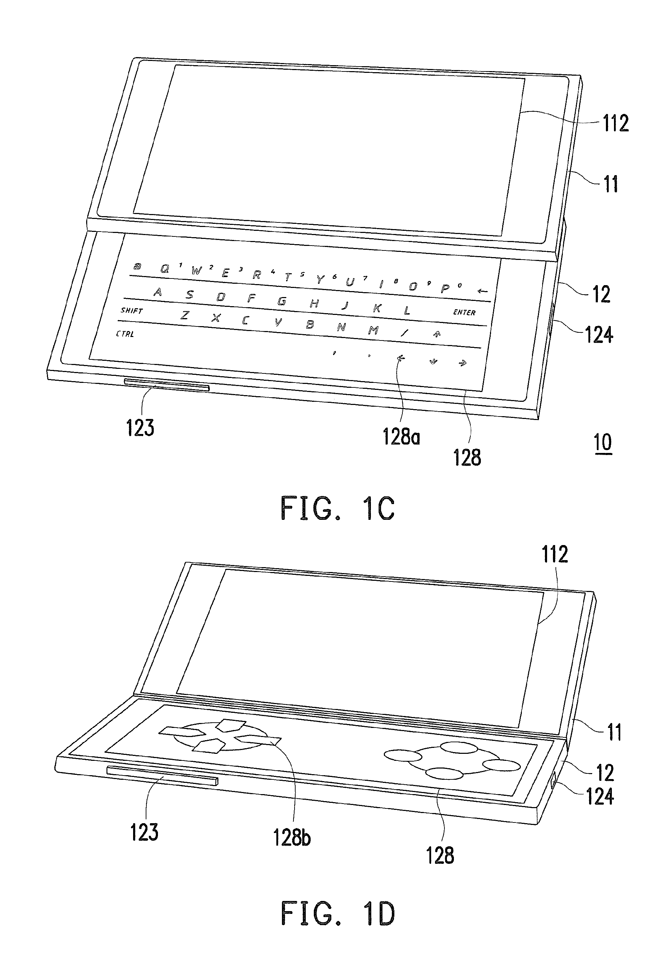

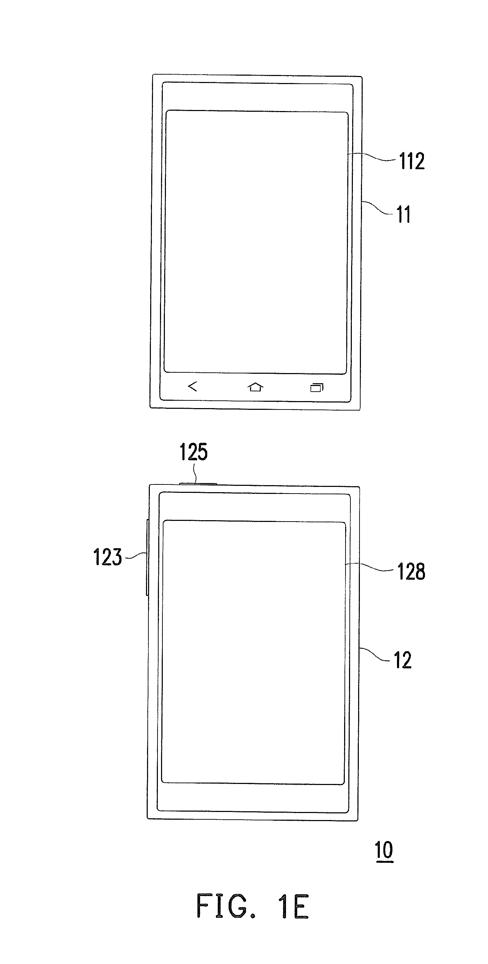

FIG. 1A to FIG. 1E are schematic diagrams of a multi-part apparatus in accordance with an embodiment of the prevent invention. Referring to FIG. 1A to FIG. 1E, the multi-part apparatus 10 in the present embodiment includes a master apparatus 11 and a slave apparatus 12, wherein the master apparatus 11 and the slave apparatus 12 are attached to each other through magnetism, so as to present an overlaid state as illustrated in FIG. 1A and FIG. 1B, a shifted state as illustrated in FIG. 1C, a side-connected state as illustrated in FIG. 1D, and a separated state as illustrated in FIG. 1E. Referring to FIG. 1A, a plurality of pins may be disposed on a side of the master apparatus 11 for connecting to the slave apparatus 12 and transmitting data; a camera 121 and a flash 122 may be disposed on a back of the slave apparatus 12; a volume control button 123 may be disposed on a side; a connection port 124 may be disposed on a bottom for power charging or data transmission. Referring to FIG. 1B, a power button 125 and a headphone port 126 may be disposed on a top of the slave apparatus 12 ; a plurality of pins 127 may be disposed on another side for connecting to the pins 111 of the master apparatus 11 and transmitting data.

Referring to FIG. 1C and FIG. 1D, touch screens 112 and 128 are disposed on the fronts of the master apparatus 11 and the slave apparatus 12 respectively, wherein images being displayed on the touch screens 112 and 128 may be changed based on a connection status between the master apparatus 11 and the slave apparatus 12 and types of applications being executed. For example, while the master apparatus 11 and the slave apparatus 12 are in the shifted state, the touch screen 128 of the slave apparatus 12 may display a virtual keypad 128a for the user to input text; while the master apparatus and the slave apparatus 12 are in the side-connected state, the touch screen 128 of the slave apparatus 12 may display a virtual joystick 128b for the user to control games displayed on the touch screen 112 of the master apparatus 11.

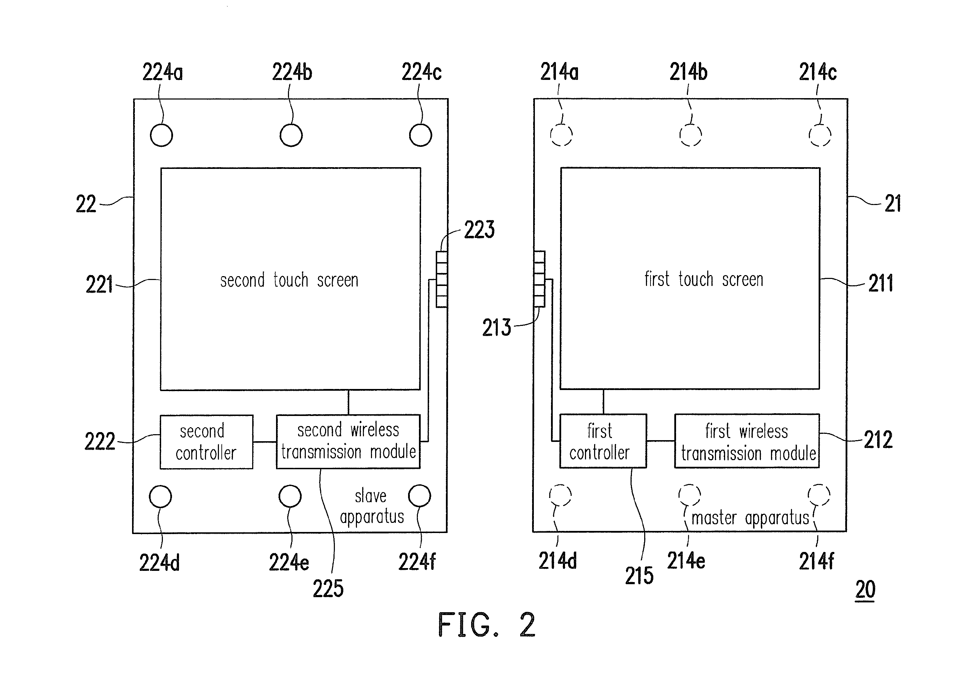

FIG. 2 is a block diagram of a multi-pait apparatus in accordance with an embodiment of the prevent invention. Referring to FIG. 2, the multi-part apparatus 20 in the present invention includes a master apparatus 21 and a slave apparatus 22 attached to each other through magnetism. The two apparatuses are, for example, thin electronic apparatuses such as cellular phones, personal digital assistants, or tablet computers, which may operate independently or may be stacked as a single apparatus to cooperate with each other. Dispositions and functionalities of elements of the master apparatus 21 and the slave apparatus 22 will be described separately as follows.

The master apparatus 21 includes the first touch screen 211 disposed on a front, a first wireless transmission module 212, a plurality of first pins 213 disposed on a side, a plurality of first magnetic objects 214a∼214f disposed on a back, and a first controller 215 coupled to the first touch screen 211, the first wireless transmission module 212 and the first pins 213.

The slave apparatus 22 includes a second touch screen 221 disposed on a front, a wireless transmission module 222, a plurality of second pins 223 disposed on a side for correspondingly connecting to the first pins 213 of the master apparatus, a plurality of second magnetic objects 224a∼224f on a front, and a second controller 225 coupled to the second touch screen 221, the second wireless transmission module 222, and the second pins 223.

The first wireless transmission module 212 and the second wireless transmission module 222, for example, are devices supporting a communication protocol such as wireless fidelity (Wi-Fi), worldwide interoperability for microwave access (WiMAX), Bluetooth, or radio-frequency identification (RFID), wherein the two modules correspond to each other for allowing a wireless connection to be set up.

Additionally, the second magnetic objects 224a∼224f are disposed on the front of the slave apparatus 22 at positions correspond to the positions of the first magnetic objects 214a∼214f of the master apparatus 21 for attracting the first magnetic object 214a∼214f through magnetism, and therefore the master apparatus 21 and the slave apparatus 22 are able to be attached to each other with a shift or with an overlay. While the master apparatus 21 and the salve apparatus 22 are in an overlaid, shifted, or separated state, the first controller 215 and the second controller 225 transmit data via the wireless connection; while the master apparatus 21 and the slave apparatus 22 are in the overlaid state, the second touch screen 221 of the slave apparatus 22 is covered by the first apparatus 21.

Moreover, the first pins 213 and the second pins 223 include, for example, power pins, ground pins, mobile industry processor interface (MIPI) pins, inter-integrated circuit (I₂C) pins, and general purpose input/output (GPIO) pins. The number of the MIPI pins is, for example, four for transmitting display data of the touch screen; the number of the I₂C pins is, for example, two for transmitting touch signal data detected by the touch screen; the number of the GPIO pins is, for example, one or two and the GPIO pins are used for transmitting status data, synchronization data, and other data of the master apparatus 21 and the slave apparatus 22. The type, number, and arrangement of the pins may be selected by manufacturers based on requirements, which are not limited herein.

It is noted that, in order to allow the master apparatus 21 and the slave apparatus 22 of the multi-part apparatus 20 to communicate with each other and transmit data in the shifted or separated state, in the present invention, a wireless connection is adopted for transmitting control instructions between the master apparatus 21 and the slave apparatus 22 so as to synchronize the status of the two apparatuses and enable the two apparatuses to cooperate to execute the programs run by the user and respectively display images corresponding to the executed programs on the touch screens thereof.

Additionally, when the master apparatus 21 is pushed toward the side of the slave apparatus 22 by the user until the two apparatuses are connected with the sides thereof, the first pins 213 and the second pins 223 on the sides are connected with each other for providing a wired connection between the master apparatus 21 and the slave apparatus 22. Such connection provides a higher data transmission bandwidth for transmitting data with larger sizes such as operation images or touch signals. An embodiment will be described in detail as follows.

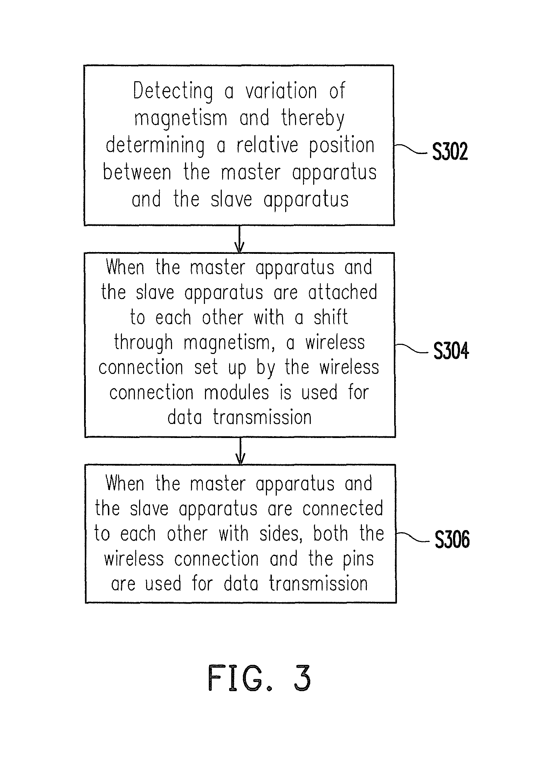

FIG. 3 is a flow diagram of a data transmission method of a multi-part apparatus in accordance with an embodiment in the present embodiment. Referring to FIG. 3, the method in the present embodiment is adapted to the multi-part apparatus 20 in FIG. 2. The detailed steps of the method in the present embodiment are described along with each of the elements of the multi-part apparatus 20 as follows.

First, the first controller 215 of the master apparatus 21 or the second controller 225 of the slave apparatus 22 detects a variation of the magnetism between the first magnetic objects 214a∼214f of the master apparatus 21 and the second magnetic objects 224a∼224f of the slave apparatus 22, and thereby determines a relative position between the first magnetic objects 214a∼214f and the second magnetic objects 224a∼224f and further determines a relative position between the master apparatus 21 and the slave apparatus 22 accordingly (Step S302). A plurality of magnetic effect sensors, such as, but not limited to, Hall sensors and magnetic reed switches, may be disposed on the master apparatus 21 or the slave apparatus 22 for detecting the variation of the magnetism between the first magnetic objects 214a∼214f and the second magnetic objects 224a∼224f. Data of the variation of the magnetism detected by the magnetic effect sensors may be transmitted to the first controller 215 or the second controller 225 for determining the relative position between the master apparatus 21 and the slave apparatus 22.

If the master apparatus 21 and the slave apparatus 22 are attached to each other with a shift through magnetism, the first controller 215 and the second controller 225 may transmit data via the wireless connection set up by the first wireless transmission module 212 and the second wireless transmission module 222 (Step S304).

It is noted that, while the master apparatus 21 and the slave apparatus 22 are attached to each other with a shift through magnetism, a part of the second touch screen 221 of the slave apparatus 222 is covered by the master apparatus 21, and therefore while displaying, the second touch screen 221 only displays an operation image on the part not covered by the master apparatus 21. Additionally, as the number of the magnetic objects increases, the master apparatus 21 and the slave apparatus 22 may provide a multi-stage shift therebetween and operation images correspond to different shifts.

In detail, the first controller 215 of the master apparatus 21 may, for example, change the operation images displayed on both the first touch screen 211 of the master apparatus 21 and the second touch screen 221 of the slave apparatus 22 based on a shifted distance between the master apparatus 21 and the slave apparatus 22. The operation image of the second touch screen 221 of the slave apparatus 22 may be determined based on a size of an exposed area of the second touch screen 221 after the shift. For example, a keypad, a scroll, a joystick, or a touch pad for operating the operation image on the master apparatus 21 may be displayed according to the size of the exposed area. Moreover, the operation images displayed on the first touch screen 211 and the second touch screen 221 according to the shifted distance may be preset upon manufacture or defined by the user, which are not limited herein.

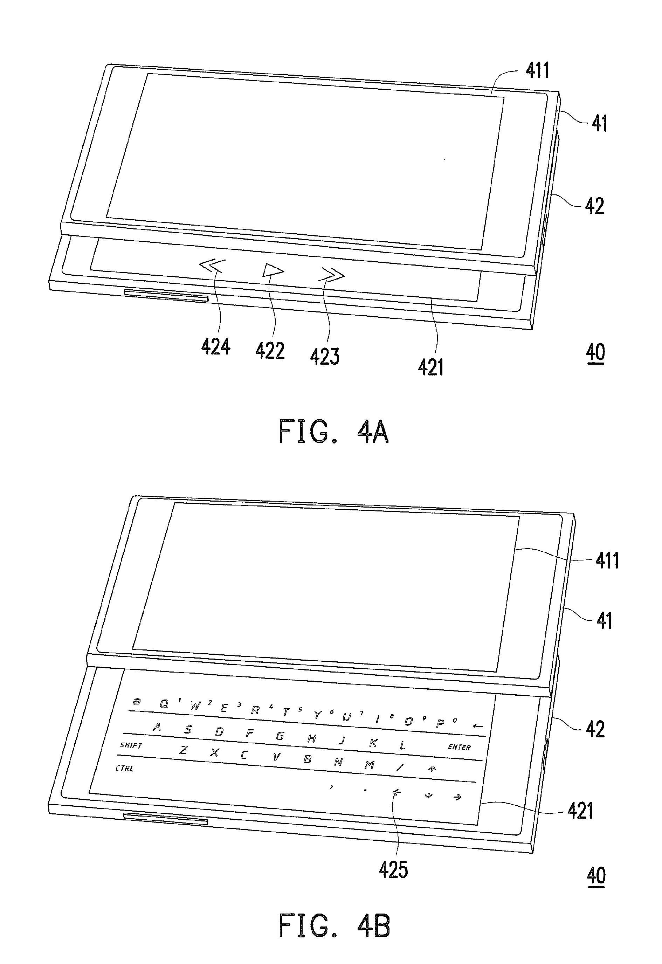

As an example, FIG. 4A and FIG. 4B are operation images of a multi-part apparatus with different shifts in accordance with an embodiment in the present invention. Referring to FIG. 4A, when the user push a master apparatus 41 of a multi-part apparatus 40 toward a side of a slave apparatus 42 by about one third of a width of the slave apparatus 42, only one third of a touch screen 421 of the slave apparatus 42 is exposed. Control buttons such as a PLAY button 422, a FAST-FORWARD button 423, and a REVERSE button 424 are displayed for providing the user to operate a multimedia displayed on the touch screen 411 of the master apparatus 41. Referring to FIG. 4B, when the user push the master apparatus 41 of the multi-part apparatus 40 toward the side of the slave apparatus 42 by about three fourth of the width of the slave apparatus 42, three fourth of the touch screen 421 of the slave apparatus 42 is exposed, and for example, a virtual keypad 425 may be displayed for the user to input text into a document displayed on the touch screen 411 of the master apparatus 41.

Back to the flow of FIG. 3, if the master apparatus 21 and the slave apparatus 22 are connected to each other with the sides (i.e. the side of the master apparatus 21 where the first pins 213 are disposed and the side of the slave apparatus 22 where the second pins 223 are disposed), the first controller 215 and the second controller 225 may transmit data via the wireless connection and the wired connection formed by the first pins 213 and the second pins 223 (Step S306). If the first controller 215 and the second controller 225 determine that the master apparatus 21 and the slave apparatus 22 are connected to each other with the sides thereof, then they may transmit a control instruction via the wireless connection set up by the first wireless transmission module 212 and the second wireless transmission module 222. Moreover, the first controller 215 and the second controller 225 may transmit data of the operation images to be displayed on the first touch screen 211 of the master apparatus 21 and the second touch screen 221 of the slave apparatus 22 via the wired connection formed by the first pins 213 and the second pins 223 and transmit data of touch operation detected by the touch screen 211 of the master apparatus 21 and the touch screen 221 of the slave apparatus 22.

It is noted that, based on cost evaluations, in the present invention, a processor with higher arithmetic ability may be selectively disposed on one of the master apparatus or the slave apparatus while a processor with basic arithmetic ability may be disposed on the other one. Furthermore, a main control of a multi-part apparatus may be selectively passed to the master apparatus or the slave apparatus, so as to control an overall operation of the multi-part apparatus.

For example, the master apparatus may be a feature phone on which a modem may be disposed for providing basic communication features such as phone calls and text messages. Since these features do not require high demands on the arithmetic ability from the processor, a single-core processor or a dual-core processor with lower arithmetic ability may be disposed on the master apparatus. On the other hand, the slave apparatus may be a personal digital assistant or a tablet computer in which a plurality of applications may be installed for providing a variety of features such as multimedia playing, web browsing, and gaming. Since these features require high demands on the arithmetic ability from the processor, a quad-core processor with higher arithmetic ability may be disposed on the slave apparatus. More details according to another embodiment are described as follows.

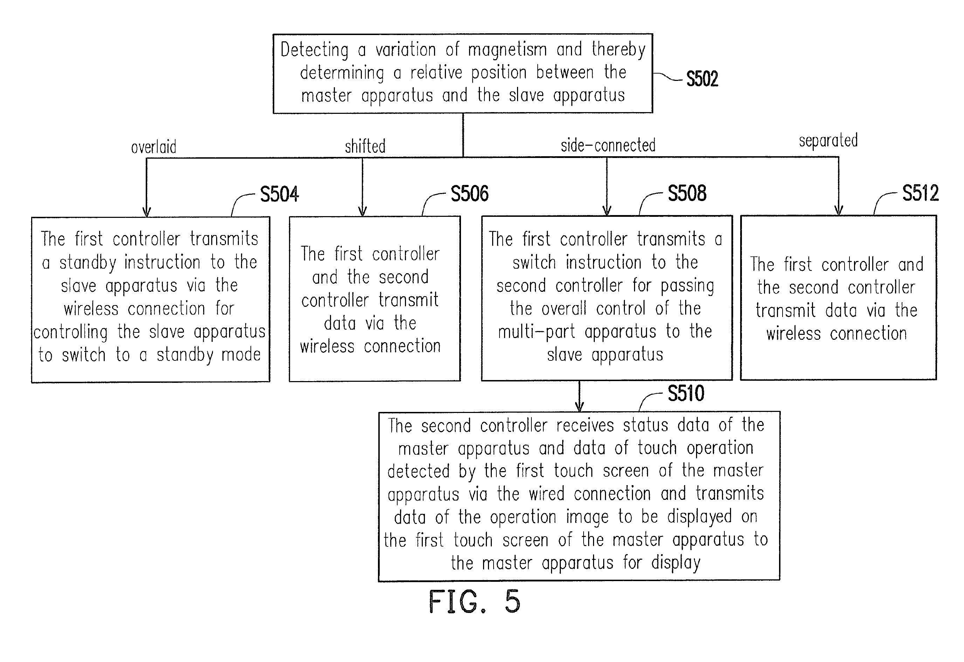

FIG. 5 is flow diagram of a data transmission method of a multi-part apparatus in accordance with another embodiment in the invention. Referring to FIG. 5, the method in the present embodiment is adapted to the multi-part apparatus 20 in FIG. 2, wherein the master apparatus 21 may be, for example, a feature phone, and the slave apparatus 22 may be, for example, a tablet computer. Moreover, in the present embodiment, it is assumed that while the master apparatus 21 and the slave apparatus 22 are in an overlaid, shifted, or separated state, the master apparatus 21 receives a main control of the multi-part apparatus 20 and further controls an overall operation of the multi-part apparatus 20; while the master apparatus 21 and the slave apparatus 22 are in a side-connected state, the slave apparatus 22 receives the main control of the multi-part apparatus 20 and further controls the overall operation of the multi-part apparatus 20. Detailed steps of the method in the present embodiment are described along with each of the elements of the multi-part apparatus 20 as follows.

First, the first controller 215 of the master apparatus 21 or the second controller 225 of the slave apparatus 22 detects a variation of the magnetism between the first magnetic objects 214a∼214f of the master apparatus 21 and the second magnetic objects 224a∼224f of the slave apparatus 22, and thereby determines a relative position between the first magnetic objects 214a∼214f and the second magnetic objects 224a∼224f, and further determines a relative position between the master apparatus 21 and the slave apparatus 22 accordingly (S502).

When the first controller 215 determines that the master apparatus 21 and the slave apparatus 22 are attached to each other with an overlay through the magnetism, it may transmit a standby instruction to the slave apparatus 22 via the wireless connection set up by the first wireless transmission module 212 and the second wireless transmission module 222, so as to control the slave apparatus 22 to switch to a standby mode (Step S504) for power saving.

When the first controller determines that the master apparatus 21 and the slave apparatus 22 are attached to each other with a shift through the magnetism, the first controller 215 and the second controller 225 may transmit data with each other via the wireless connection set up by the first wireless transmission module 212 and the second wireless transmission module 222 (Step S506).

When the first controller determines that the master apparatus 21 and the slave apparatus 22 are connected to each other with the sides (i.e. the side of the master apparatus 21 where the first pins 213 are disposed and the side of the slave apparatus 22 where the second pins 223 are disposed), the first controller 215 may transmit a switch instruction to the second controller 225 of the slave apparatus 22 via the wireless connection set up by the first wireless transmission module 212 and the second wireless transmission module 222 for passing the overall control of the multi-part apparatus 20 to the slave apparatus 22 (Step S508). Nonetheless, the present invention is not limited to transmitting the switch instruction via the wireless connection. In another embodiment, when the first pins 213 and the second pins 223 are wire-connected, the first controller 215 may transmit the switch instruction to the second controller 225 of the slave apparatus 22 via the wired connection for passing the overall control of the multi-apparatus 20 to the slave apparatus 22.

When the second controller 225 receives the switch instruction, for example, it may receive status data of the master apparatus 21 and data of touch operation detected by the first touch screen 211 of the master apparatus 21 via the wired connection formed by the first pins 213 and the second pins 223, and further transmit data of operation image to be displayed on the first touch screen 211 of the master apparatus 21 to the master apparatus 21 for display (Step S510).

The second controller 225 may continue executing features previously executed by the master apparatus 21 based on the received status data of the master apparatus 21. For example, the second controller 225 may execute a corresponding feature according to the data of touch operation detected by the first touch screen 211 of the master apparatus 21. Additionally, after the second controller 225 receives the overall control, it may, for example, integrate the second touch screen 221 and the first touch screen 211 of the master apparatus into a single operation image (i.e. an image divided into an upper and lower portion) for maximizing a display area of the touch screens.

For example, assuming that the user originally browses websites on the master apparatus 21, when the overall control of the multi-part apparatus 20 is passed to the slave apparatus 22, the second controller 225 of the slave apparatus 22 may, for example, receive an address of the browsed website on the master apparatus 21 via the wired connection or the wireless connection and reconnect to the same address for opening the same website. The second controller 225 may transmit, for example, image data of an upper portion of the website to the master apparatus 21 via the wired connection for displaying on the first touch screen 211 of the master apparatus 21, and simultaneously display a bottom portion of the websites directly on the second touch screen 221, and thereby the display area of the first touch screen 211 and the second touch screen 221 are integrated for providing the user with a larger display area for web browsing.

When the first controller 215 determines that the master apparatus 21 and the slave apparatus 22 are separated from each other, the first controller 215 and the second controller 225 may transmit data via the wireless connection set up by the first wireless transmission module 212 and the second wireless transmission module 222 (Step S512). In case the master apparatus 21 and the slave apparatus 22 are separated from each other, the user may, for example, control the slave apparatus 22 to execute features by using the master apparatus 21 via the wireless connection and request the slave apparatus 22 to return results of executions to the master apparatus 21 via the wireless connection. Through this, the user may be given flexibility in operating the multi-part apparatus 20.

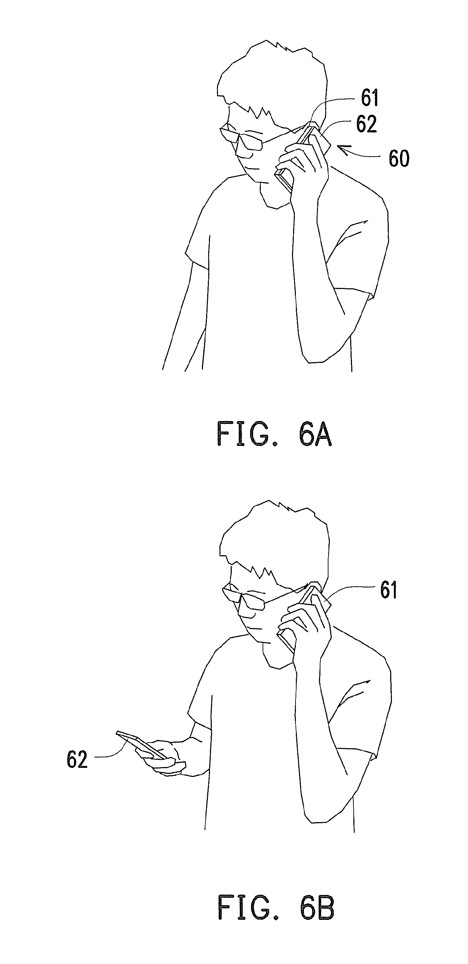

For example, FIG. 6A to FIG. 6C are illustrations of usage of a multi-part apparatus in accordance with an embodiment in the present invention. Referring to FIG. 6A and FIG. 6B, while a master apparatus 61 and a slave apparatus 62 of a multi-part apparatus 60 are overlaid with each other, the multi-part apparatus 60 is utilized as a cellular phone for the user to make/receive phone calls or send/receive text messages. If the user needs to, for example, look up other contacts or locate himself/herself during a phone call by using the multi-part apparatus 60, then as illustrated in FIG. 6B, the slave apparatus 62 may be pulled out from the master apparatus 61 so as to make/receive the phone call by using the master apparatus 61 and search for required information by operating the slave apparatus 62 at the same time. The search results may be returned to the master apparatus 61 from the slave apparatus 62 via the wireless connection between the master apparatus 61 and the slave apparatus 62 and further sent to a person on the other side of the phone call via a communication connection established by the master apparatus 61.

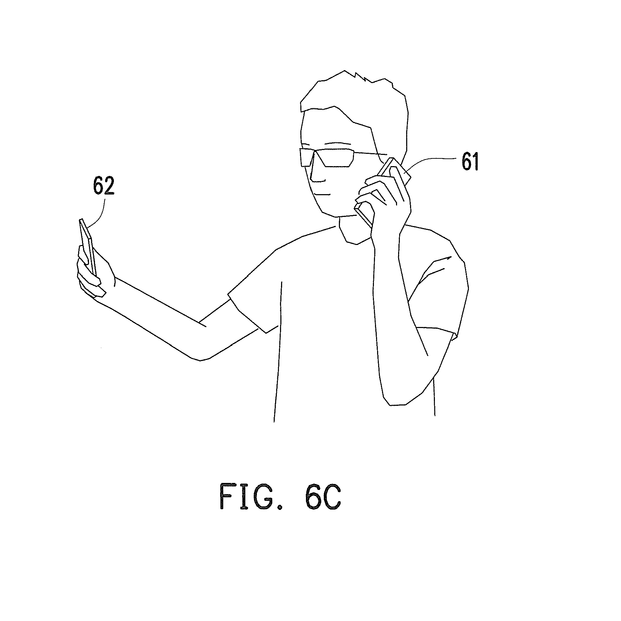

Then, referring to FIG. 6A and FIG. 6C, if the user wishes to take and share photos during a phone call by using the multi-part apparatus 60, the slave apparatus 62 may be pulled out from the master apparatus 61 so as to make/receive the phone call by using the master apparatus 61 and take photos by using the slave apparatus 62 at the same time, and the photos taken by the slave apparatus 62 may be returned to the master apparatus 61 via the wireless connection between the master apparatus 61 and the slave apparatus 62 and further sent to the person on the other side of the phone call via the communication connection established by the master apparatus 61. The above illustrations of usage are only for examples and not intended to limit the present invention. Based on actual needs, the user may execute the required features by the master apparatus 61 and the slave apparatus 62 with flexibility.

To sum up, a multi-part apparatus and a data transmission method thereof in the present invention attach two apparatuses through magnetism and determine a disposition status between the two apparatuses such as an overlaid, shifted, side-connected, or separated state by detecting a variation of the magnetism. In accordance with the determined disposition status, a suitable data transmission method is adopted. Accordingly, a larger display area and a greater flexibility in usage may be realized on mobile apparatuses.

## Claims

1. A data transmission method of a multi-part apparatus (10, 20, 40, 60), adapted to the multi-part apparatus (10, 20, 40, 60) having a master apparatus (11, 21, 41, 61) and a separable slave apparatus (12, 22, 42, 62), wherein the master apparatus (11, 21, 41, 61) and the slave apparatus (12, 22, 42, 62) are attached to each other through magnetism and each of the master apparatus (11, 21, 41, 61) and the slave apparatus (12, 22, 42, 62) comprises a wireless transmission module (212, 225) and a plurality of pins (213, 223) disposed on a side, the method comprising:
detecting (S302, S502) a variation of the magnetism and accordingly determining a relative position between the master apparatus (11, 21, 41, 61) and the slave apparatus (12, 22, 42, 62);
using (S304) a wireless connection set up by the wireless connection module for data transmission when the master apparatus (11, 21, 41, 61) and the slave apparatus (12, 22, 42, 62) are attached to each other with a shift; and
using (S306) the wireless connection and the pins (213, 223) for data transmission when the master apparatus (11, 21, 41, 61) and the slave apparatus (12, 22, 42, 62) are connected to each other with the sides thereof.

2. The data transmission method of the multi-part apparatus (10, 20, 40, 60) of claim 1, wherein each of the master apparatus (11, 21, 41, 61) and the slave apparatus (12, 22, 42, 62) further comprises a plurality of magnetic objects (214a∼214f, 224a∼224f) correspondingly positioned to those of the other for detecting the variation of the magnetism and the step of determining the relative position between the master apparatus (11, 21, 41, 61) and the slave apparatus (12, 22, 42, 62) comprises:
detecting the variation of the magnetism between the magnetic objects (214a∼214f, 224a∼224f) of the master apparatus (11, 21, 41, 61) and the slave apparatus (12, 22, 42, 62), determining a relative position between the magnetic objects (214a∼214f, 224a∼224f), and thereby determining the relative position between the master apparatus (11, 21, 41, 61) and the slave apparatus (12, 22, 42, 62).

3. The data transmission method of the multi-part apparatus (10, 20, 40, 60) of claim 1 or 2, wherein each of the master apparatus (11, 21, 41, 61) and the slave apparatus (12, 22, 42, 62) further comprise a touch screen (112, 128, 211, 221, 411, 421), and the touch screen (112, 128, 211, 221, 411, 421) of the slave apparatus (12, 22, 42, 62) is covered by the master apparatus (11, 21, 41, 61) when the master apparatus (11, 21, 41, 61) and the slave apparatus (12, 22, 42, 62) are attached to each other with an overlay.

4. The data transmission method of the multi-part apparatus (10, 20, 40, 60) of claim 3, wherein after the step of detecting the variation of the magnetism for determining the relative position between the master apparatus (11, 21, 41, 61) and the slave apparatus (12, 22, 42, 62), the method further comprises:
the master apparatus (11, 21, 41, 61) transmitting (S504) a standby instruction to the slave apparatus (12, 22, 42, 62) via the wireless connection for controlling the slave apparatus (12, 22, 42, 62) to switch to a standby mode when the master apparatus (11, 21, 41, 61) and the slave apparatus (12, 22, 42, 62) are attached to each other with the overlay.

5. The data transmission method of the multi-part apparatus (10, 20, 40, 60) of claim 3 or 4, wherein when the master apparatus (11, 21, 41, 61) and the slave apparatus (12, 22, 42, 62) are attached with the shift, the step of using the wireless connection set up by the wireless transmission modules (212, 225) for data transmission further comprises:
the master apparatus (11, 21, 41, 61) changing an operation image displayed on the touch screen (112, 128, 211, 221, 411, 421) of each of the master apparatus (11, 21, 41, 61) and the slave apparatus (12, 22, 42, 62) based on a shifted distance between the master apparatus (11, 21, 41, 61) and the slave apparatus (12, 22, 42, 62), wherein the operation image displayed on the touch screen (112, 128, 211, 221, 411, 421) of the slave apparatus (12, 22, 42, 62) is determined by a size of an exposed area of the touch screen (112, 128, 211, 221, 411, 421) after the shift.

6. The data transmission method of the multi-part apparatus (10, 20, 40, 60) of any one of claims 3 to 5, wherein the step of using the wireless connection and the pins (213, 223) for data transmission when the master apparatus (11, 21, 41, 61) and the slave apparatus (12, 22, 42, 62) are connected to each other with the sides thereof comprises:
transmitting a control instruction via the wireless connection; and
transmitting data of operation images to be displayed on the touch screens (112, 128, 211, 221, 411, 421) of the master apparatus (11, 21, 41, 61) and the slave apparatus (12, 22, 42, 62) and data of touch operation detected by the touch screens (112, 128, 211, 221, 411, 421) of the master apparatus (11, 21, 41, 61) and the slave apparatus (12, 22, 42, 62) via the pins (213, 223).

7. The data transmission method of the multi-part apparatus (10, 20, 40, 60) of claim 6, wherein the step of using the wireless connection and the pins (213, 223) for data transmission when the master apparatus (11, 21, 41, 61) and the slave apparatus (12, 22, 42, 62) are connected to each other with the sides thereof comprises:
the master apparatus (11, 21, 41, 61) transmitting a switch instruction to the slave apparatus (12, 22, 42, 62) via the wireless connection for passing an overall control of the multi-part apparatus (10, 20, 40, 60) to the slave apparatus (12, 22, 42, 62); and
the slave apparatus (12, 22, 42, 62) receiving a status data of the master apparatus (11, 21, 41, 61) and the data of touch operation detected by the touch screen (112, 211, 411) of the master apparatus (11, 21, 41, 61) via the pins (213, 223) and transmitting the operation image to be displayed on the touch screen (112, 211, 411) of the master apparatus (11, 21, 41, 61) to the master apparatus (11, 21, 41, 61) for display.

8. The data transmission method of the multi-part apparatus (10, 20, 40, 60) of any one of claims 1 to 7, wherein the pins (213, 223) comprise power pins, ground pins, mobile industry processor interface (MIPI) pins, inter-integrated circuit (I₂C) pins, and general purpose input/output (GPIO) pins.

9. A multi-part apparatus (10, 20, 40, 60), comprising:
a master apparatus (11, 21, 41, 61), comprising:
a first touch screen (112, 211, 411), disposed on a front of the master apparatus (11, 21, 41, 61);
a first wireless transmission module (212);
a plurality of first pins (213), disposed on a side of the master apparatus (11, 21, 41, 61);
a plurality of first magnetic objects (214a∼214f), disposed on a back of the master apparatus (11, 21, 41, 61);
a first controller (215), coupled to the first touch screen (112, 211, 411), the first wireless transmission module (212), and the first pins (213); and
a slave apparatus (12, 22, 42, 62), comprising:
a second touch screen (128, 221, 421), disposed on a front of the slave apparatus (12, 22, 42, 62);
a second wireless transmission module (225), configured to set up a wireless connection with the first wireless transmission module (212);
a plurality of second pins (223), disposed on a side of the slave apparatus (12, 22, 42, 62) and configured to correspondingly connect to the first pins (213) of the master apparatus (11, 21, 41, 61);
a plurality of second magnetic objects (224a∼224f), disposed on the front of the slave apparatus (12, 22, 42, 62) corresponding to positions of the first magnetic objects (214a∼214f) on the master apparatus (11, 21, 41, 61) and configured to attract the first magnetic objects (214a∼214f) through magnetism to enable the master apparatus (11, 21, 41, 61) and the slave apparatus (12, 22, 42, 62) to be attached to each other with an overlay or a shift; and
a second controller (222), coupled to the second touch screen (128, 221, 421), the second wireless transmission module (225), and the second pins (223), wherein
the first controller (215) and the second controller (222) transmit data via the wireless connection when the master apparatus (11, 21, 41, 61) and the slave apparatus (12, 22, 42, 62) are attached to each other with the shift; and
the first controller (215) and the second controller (222) transmit data via the wireless connection and a wired connection between the first pins (213) and the second pins (223) when the master apparatus (11, 21, 41, 61) and the slave apparatus (12, 22, 42, 62) are connected to each other with the sides thereof.

10. The multi-part apparatus (10, 20, 40, 60) of claim 9, wherein the first controller (215) or the second controller (222) comprises detecting a variation of the magnetism between the first magnetic objects (214a∼214f) and the second magnetic objects (224a∼224f) and determining a relative position between the first magnetic objects (214a∼214f) and the second magnetic objects (224a∼224f) and thereby determining the relative position between the master apparatus (11, 21, 41, 61) and the slave apparatus (12, 22, 42, 62).

11. The multi-part apparatus (10, 20, 40, 60) of claim 9 or 10, wherein the second touch screen (128, 221, 421) of the slave apparatus (12, 22, 42, 62) is covered by the master apparatus (11, 21, 41, 61) when the master apparatus (11, 21, 41, 61) and the slave apparatus (12, 22, 42, 62) are attached to each other with the overlay.

12. The multi-part apparatus (10, 20, 40, 60) of any one of claims 9 to 11, wherein the first controller (215) of the master apparatus (11, 21, 41, 61) further comprises changing operation images displayed on the first touch screen (112, 211, 411) of the master apparatus (11, 21, 41, 61) and on the second touch screen (128, 221, 421) of the slave apparatus (12, 22, 42, 62) based on a shifted distance between the master apparatus (11, 21, 41, 61) and the slave apparatus (12, 22, 42, 62), wherein the operation image displayed on the second touch screen (128, 221, 421) of the slave apparatus (12, 22, 42, 62) is determined by a size of an exposed area of the second touch screen (128, 221, 421) after the shift.

13. The multi-part apparatus (10, 20, 40, 60) of any one of claims 9 to 12, wherein the first controller (215) and the second controller (222) comprise transmitting a control instruction via the wireless connection and transmitting data of operation images to be displayed on the first touch screen (112, 211, 411) of the master apparatus (11, 21, 41, 61) and on the second touch screen (128, 221, 421) of the slave apparatus (12, 22, 42, 62) and data of touch operation detected by the first touch screen (112, 211, 411) of the master apparatus (11, 21, 41, 61) and the second touch screen (128, 221, 421) of the slave apparatus (12, 22, 42, 62) via the wired connection between the first pins (213) and the second pins (223) when the master apparatus (11, 21, 41, 61) and the slave apparatus (12, 22, 42, 62) are determined to be connected to each other with the sides thereof.

14. The multi-part apparatus (10, 20, 40, 60) of claim 13, wherein the first controller (215) further comprises transmitting a switch instruction to the slave apparatus (12, 22, 42, 62) via the wireless connection for passing an overall control of the multi-part apparatus (10, 20, 40, 60) to the slave apparatus (12, 22, 42, 62) when the master apparatus (11, 21, 41, 61) and the slave apparatus (12, 22, 42, 62) are determined to be connected to each other with the sides thereof.

15. The multipart apparatus (10, 20, 40, 60) of claim 14, wherein the second controller (222) further comprises receiving a status data of the master apparatus (11, 21, 41, 61) and the touch operation data detected by the first touch screen (112, 211, 411) of the master apparatus (11, 21, 41, 61) via the wired connection between the first pins (213) and the second pins (223) and transmitting the operation image to be displayed on the first touch screen (112, 211, 411) on the master apparatus (11, 21, 41, 61) to the master apparatus (11, 21, 41, 61) for display when receiving the switch instruction.
